# EUROPÄISCHE PATENTANMELDUNG

(11) **EP 4 708 664 A2**
(43) Veröffentlichungstag der Anmeldung: **11.03.2026**
(21) Anmeldenummer: 26152546.3
(22) Anmeldetag: 29.03.2020
(51) Int. Cl.: H02P 3/18

(54) **SICHERHEITSDREHMOMENTABSCHALTEINRICHTUNG ZUM UNTERBRECHEN EINER DREHMOMENTERZEUGUNG DURCH EINE VON EINER LEISTUNGSVERSORGUNGSEINRICHTUNG VERSORGTE ANTRIEBSMASCHINE EINER AUFZUGANLAGE**

(30) Priorität: 29.03.2019 EP 19166306
(62) Teilanmeldung aus: 20714610.1
(71) Anmelder: INVENTIO AG, 6052 Hergiswil (CH)
(72) Erfinder: Eilinger, Thomas, 6403 Küssnacht am Rigi (CH); Schaller, Adrian, 6006 Luzern (CH)
(74) Vertreter: Inventio AG

(57) **Zusammenfassung**

Offenbart wird eine Sicherheitsdrehmomentabschalteinrichtung (15) zum Unterbrechen einer Drehmomenterzeugung durch eine von einer Leistungsversorgungseinrichtung versorgte Antriebsmaschine einer Aufzuganlage,
wobei die Sicherheitsdrehmomentabschalteinrichtung (15) einen Steuereingang (33) und eine zweite Vielzahl jeweils von Signaleingangsanschlüssen (35) und von Signalausgangsanschlüssen (37) und von ersten und zweiten Signalübertragungsschaltern (39, 41) aufweist, wobei jeder der Signalausgänge (29) einer Signalerzeugereinrichtung an einen der Signaleingangsanschlüsse (35) und jeder der Signaleingänge einer Treiberschaltung an einen der Signalausgangsanschlüsse (37) anschließbar ist;
wobei jeder der Signalübertragungsschalter (39, 41) mit einem in einem Normalzustand leitenden Halbleiterschalter (47) ausgebildet ist, welcher bei einem Fehlen einer Steuerspannung an einem Gate-Anschluss (49) eine elektrische Verbindung zwischen dem dem Signalübertragungsschalter (39, 41) zugeordneten Signaleingangsanschluss (35) und einem Erdungspotenzial (51) bewirkt und bei Anliegen der Steuerspannung an dem Gate-Anschluss (49) die elektrische Verbindung zwischen dem dem Signalübertragungsschalter (39, 41) zugeordneten Signaleingangsanschluss (35) und einem Erdungspotenzial (51) unterbricht,
wobei der Steuereingang (33) mit einer ersten und einer zweiten Steuereinheit (43, 45) elektrisch verbunden ist und die erste Steuereinheit (43) gesteuert durch ein an dem Steuereingang (33) anliegendes Steuersignal Schaltzustände aller ersten Signalübertragungsschalter (39) schaltet und die zweite Steuereinheit (45) gesteuert durch das an dem Steuereingang (33) anliegende Steuersignal Schaltzustände aller zweiten Signalübertragungsschalter (41) schaltet,
wobei jede der Steuereinheiten (43, 45) dazu konfiguriert ist, abhängig von dem an dem Steuereingang (33) anliegenden Steuersignal die Steuerspannung an die Gate-Anschlüsse (49) aller der jeweiligen Steuereinheit (43, 45) zugeordneter Signalübertragungsschalter (39, 41) anzulegen.

## Beschreibung

Die vorliegende Erfindung betrifft eine Sicherheitsdrehmomentabschalteinrichtung zum Unterbrechen einer Drehmomenterzeugung durch eine von einer Leistungsversorgungseinrichtung versorgte Antriebsmaschine einer Aufzuganlage. Ferner betrifft die Erfindung eine Wechselrichtereinrichtung zum Bereitstellen einer elektrischen Antriebsleistung für eine Antriebsmaschine einer Aufzuganlage sowie eine damit ausgestattete Aufzuganlage.

In einer Aufzuganlage wird eine Aufzugkabine typischerweise mithilfe einer Antriebsmaschine vertikal zwischen verschiedenen Höhenniveaus hin zu Stopppositionen an unterschiedlichen Stockwerken, an denen Passagiere in die Aufzugkabine einsteigen und aussteigen können sollen, verlagert. Um die Passagiere nicht zu gefährden, muss dabei sichergestellt sein, dass die Aufzugkabine, während ein Passagier ein- oder aussteigt, nicht weiter verlagert wird.

Um dies gewährleisten zu können, kann in Regularien wie beispielsweise der europäischen Norm EN81-20:2014 gefordert sein, das unter Einsatz geeigneter technischer Maßnahmen sichergestellt wird, dass eine Drehmomenterzeugung durch die Antriebsmaschine beispielsweise in Reaktion auf ein vorbestimmtes Signal von einer Sicherheitskette der Aufzuganlage zuverlässig temporär unterbunden werden kann. Hierbei kann gefordert sein, dass die einzusetzenden technischen Maßnahmen dazu führen müssen, dass die Antriebsmaschine während eines Zeitraums, in dem das vorbestimmte Signal ausgegeben wird, nicht mit elektrischer Antriebsleistung versorgt werden kann. Technische Einrichtungen, die zu einem zuverlässigen Unterbrechen einer Drehmomenterzeugung durch eine Antriebsmaschine eingesetzt werden können, werden auch als Sicherheitsdrehmomentabschalteinrichtungen oder STO (safety torque off) bezeichnet.

In der CN 104355195 werden eine Sicherheitsdrehmomentabschaltschaltung sowie ein Aufzug-Sicherheit-Steuersystem beschrieben. Dabei wird in Reaktion auf ein Steuersignal temporär eine Stromversorgung zu einer Leistungseinheit, welche eine Antriebsmaschine versorgt, unterbrochen.

Es kann unter anderem ein Bedarf an einer Sicherheitsdrehmomentabschalteinrichtung bestehen, mithilfe derer eine Drehmomenterzeugung durch eine von einer Leistungsversorgungseinrichtung versorgte Antriebsmaschine einer Aufzuganlage zuverlässig temporär unterbrochen werden kann und welche einfach und kostengünstig aufgebaut, zu installieren und/oder zu warten ist. Ferner kann ein Bedarf an einer Wechselrichtereinrichtung bestehen, mithilfe derer eine elektrische Antriebsleistung für eine Antriebsmaschine einer Aufzuganlage bereitgestellt werden kann und dabei die Bereitstellung der Antriebsleistung gezielt, zuverlässig und/oder in einfach technisch zu realisierender Weise temporär unterbrochen werden kann. Schließlich kann ein Bedarf an einer Aufzuganlage mit einer solchen Wechselrichtereinrichtung bestehen.

Einem solchen Bedarf kann durch den Gegenstand eines der unabhängigen Ansprüche entsprochen werden. Vorteilhafte Ausführungsformen sind in den abhängigen Ansprüchen sowie der nachfolgenden Beschreibung definiert.

Gemäß einem ersten Aspekt der Erfindung wird eine Sicherheitsdrehmomentabschalteinrichtung zum Unterbrechen einer Drehmomenterzeugung durch eine von einer Leistungsversorgungseinrichtung versorgte Antriebsmaschine einer Aufzuganlage vorgeschlagen. Die Leistungsversorgungseinrichtung weist hierbei einen Leistungseingang, einen Leistungsausgang, mehrere mit dem Leistungseingang und dem Leistungsausgang verbundene Leistungsschalter und eine die Leistungsschalter steuernde Treiberschaltung auf. Die Leistungsversorgungseinrichtung ist dazu konfiguriert, dass eine an dem Leistungseingang anliegende elektrische Leistung gesteuert durch die Leistungsschalter zumindest teilweise an den Leistungsausgang weitergeleitet wird und die Leistungsschalter von der Treiberschaltung in Abhängigkeit von Signalen, die von einer Signalerzeugereinrichtung über eine erste Vielzahl von Signalausgängen an Signaleingänge der Treiberschaltung angelegt werden, gesteuert werden. Die Sicherheitsdrehmomentabschalteinrichtung weist einen Steuereingang und eine zweite Vielzahl jeweils von Signaleingangsanschlüssen und von Signalausgangsanschlüssen auf. Jeder der Signalausgänge der Signalerzeugereinrichtung ist dabei an einen der Signaleingangsanschlüsse anschließbar und jeder der Signaleingänge der Treiberschaltung ist an einen der Signalausgangsanschlüsse anschließbar. Jeder der Signaleingangsanschlüsse ist jeweils über einen ersten und einen zweiten miteinander in Serie verschaltete Signalübertragungsschalter mit einem zugeordneten der Signalausgangsanschlüsse elektrisch durchleitend verbindbar, indem sowohl der erste Signalübertragungsschalter als auch der zweite Signalübertragungsschalter in einen durchleitenden Schaltzustand geschaltet werden. Der Steuereingang ist elektrisch mit einer ersten und einer zweiten Steuereinheit verbunden, wobei die erste Steuereinheit gesteuert durch ein an dem Steuereingang anliegendes Steuersignal Schaltzustände aller ersten Signalübertragungsschalter schaltet und die zweite Steuereinheit gesteuert durch das an dem Steuereingang anliegende Steuersignal Schaltzustände aller zweiten Signalübertragungsschalter schaltet.

Gemäß einem zweiten Aspekt der Erfindung wird eine Wechselrichtereinrichtung zum Bereitstellen einer elektrischen Antriebsleistung für eine Antriebsmaschine einer Aufzuganlage beschrieben. Die Wechselrichtereinrichtung weist eine Signalerzeugereinrichtung, eine Leistungsversorgungseinrichtung und eine Sicherheitsdrehmomentabschalteinrichtung gemäß einer Ausführungsform des ersten Aspekts der Erfindung auf. Die Signalerzeugereinrichtung ist zum Erzeugen von Steuersignalen konfiguriert, wobei die Signalerzeugereinrichtung eine erste Vielzahl von Signalausgängen aufweist. Die Leistungsversorgungseinrichtung ist mit einem Leistungseingang, einem Leistungsausgang, mehreren mit dem Leistungseingang und dem Leistungsausgang verbundenen Leistungsschaltern und einer die Leistungsschalter steuernden Treiberschaltung ausgestattet. Dabei ist Die Leistungsversorgungseinrichtung dazu konfiguriert, dass eine an dem Leistungseingang anliegende elektrische Leistung gesteuert durch die Leistungsschalter zumindest teilweise an den Leistungsausgang weitergeleitet wird und die Leistungsschalter von der Treiberschaltung in Abhängigkeit von Signalen, die von einer Signalerzeugereinrichtung über eine erste Vielzahl von Signalausgängen an Signaleingänge der Treiberschaltung angelegt werden, gesteuert werden. Für die Sicherheitsdrehmomentabschalteinrichtung soll gelten, dass jeder der Signalausgänge der Signalerzeugereinrichtung an einen der Signaleingangsanschlüsse und jeder der Signaleingänge der Treiberschaltung an einen der Signalausgangsanschlüsse angeschlossen ist.

Gemäß einem dritten Aspekt der Erfindung wird eine Aufzuganlage beschrieben, die eine Wechselrichtereinrichtung gemäß einer Ausführungsform des zweiten Aspekts der Erfindung, eine Hauptleistungsquelle zum Bereitstellen einer elektrischen Leistung an dem Leistungseingang der Leistungsversorgungseinrichtung der Wechselrichtereinrichtung, und eine elektrische Antriebsmaschine, welche an den Leistungsausgang der Leistungsversorgungseinrichtung angeschlossen ist, aufweist.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Wie einleitend bereits angegeben, ist im Stand der Technik CN 104355195 eine Sicherheitsdrehmomentabschalteinrichtung für eine Aufzuganlage bekannt, mithilfe derer temporär eine Stromversorgung zu einer Leistungseinheit, die die Antriebsmaschine der Aufzuganlage versorgt, unterbrochen werden kann. Allerdings erfolgt bei diesem bekannten Ansatz die Unterbrechung der Leistungsversorgung an die Antriebsmaschine durch einen direkten Eingriff in die Stromversorgung der Leistungseinheit beispielsweise einer Wechselrichtereinrichtung, mithilfe derer ein von einer Hauptleistungsquelle bereitgestellter elektrischer Strom geregelt an die Antriebsmaschine geliefert wird. Zum Unterbrechen der Leistungsversorgung muss dabei entsprechende Hardware direkt an der Leistungseinheit vorgesehen werden. Daher muss dieser Hardware den für die Leistungseinheit geltenden hohen Sicherheitsanforderungen genügen. Außerdem muss diese Hardware den hohen von der Leistungsversorgung zu regelnden elektrischen Leistungen gewachsen sein und diese bei Bedarf zuverlässig temporär unterbrechen können.

Im Gegensatz zu dem vorangehend beschriebenen Ansatz dient die hierin beschriebene Sicherheitsdrehmomentabschalteinrichtung dazu, die Leistungsversorgungseinrichtung beispielsweise einer Wechselrichtereinrichtung dazu zu veranlassen, temporär keine elektrische Leistung an eine an sie angeschlossene Antriebsmaschine weiterzuleiten, obwohl die Leistungsversorgungseinrichtung selbst ununterbrochen von einer Hauptleistungsquelle mit elektrischer Leistung versorgt werden kann.

Hierzu ist die Sicherheitsdrehmomentabschalteinrichtung dazu konfiguriert, mit einer Treiberschaltung, welche Leistungsschalter in der Leistungsversorgungseinrichtung steuert, zusammenzuwirken. Die Treiberschaltung kann dabei Teil eines Wechselrichters sein, der neben der Treiberschaltung die von ihr zu steuernde Leistungsversorgungseinrichtung mit den Leistungsschaltern sowie gegebenenfalls weitere Elektronik umfassen kann. Eine solche Treiberschaltung dient im Allgemeinen dazu, die Funktion der Leistungsschalter in der Leistungsversorgungseinrichtung in Abhängigkeit von an die Treiberschaltung angelegten Signalen zu steuern. Die Signale werden dabei im Allgemeinen von einer Signalerzeugereinrichtung wie beispielsweise einem Digital-Signal-Prozessor (DSP) in einer Wechselrichtersteuerung generiert und an Signaleingänge der Treiberschaltung angelegt. In Abhängigkeit von diesen Signalen kann die Treiberschaltung dann Leistungsschalter wie zum Beispiel mehrere IGBTs (Bipolartransistor mit isolierter Gate-Elektrode (englisch: insulated-gate bipolar transistor, kurz IGBT)) in der Leistungsversorgungseinrichtung geeignet steuern, um diese dazu zu veranlassen, zumindest einen Anteil der von der Hauptleistungsquelle zur Verfügung gestellten elektrischen Leistung an die Antriebsmaschine der Aufzuganlage weiterzugeben.

Die hierin vorgeschlagene Sicherheitsdrehmomentabschalteinrichtung wird zwischen die Signalerzeugereinrichtung und die Treiberschaltung der Leistungsversorgungseinrichtung geschaltet. Dabei dient die Sicherheitsdrehmomentabschalteinrichtung dazu, die von der Signalerzeugereinrichtung generierten Signale an die Treiberschaltung weiterzuleiten. Allerdings ist die Sicherheitsdrehmomentabschalteinrichtung ergänzend dazu konfiguriert, eine Weiterleitung von durch die Signalerzeugereinrichtung generierten Signalen an die Treiberschaltung steuerbar temporär zuverlässig unterbrechen zu können.

Hierzu verfügt die Sicherheitsdrehmomentabschalteinrichtung über zumindest einen Steuereingang und über eine hierin als zweite Vielzahl bezeichnete Mehrzahl von Signaleingangsanschlüssen und Signalausgangsanschlüssen.

Die zweite Vielzahl ist dabei gleich groß oder größer als die erste Vielzahl von Signalausgängen der Signalerzeugereinrichtung. Anders ausgedrückt weist die Sicherheitsdrehmomentabschalteinrichtung wenigstens genauso viele Signaleingangsanschlüsse und Signalausgangsanschlüsse auf, wie es an der Signalerzeugereinrichtung Signalausgänge gibt. Dementsprechend kann jeder der Signalausgänge der Signalerzeugereinrichtung an einen der Signaleingangsanschlüsse angeschlossen werden. Ferner kann jeder der Signaleingänge der Treiberschaltung an einen der Signalausgangsanschlüsse der Sicherheitsdrehmomentabschalteinrichtung angeschlossen werden.

Typischerweise verfügt eine Signalerzeugereinrichtung, die beispielsweise mit einem Digital-Signal-Prozessor ausgebildet ist, über mindestens sechs Signalausgänge, um die drei Phasen mit je zwei Leistungsschaltern eines zur Leistungsversorgung eingesetzten Drehstroms in der Leistungsversorgungseinrichtung in gewünschter Weise steuern zu können. Dementsprechend ist die Sicherheitsdrehmomentabschalteinrichtung mit sechs oder mehr Signaleingangsanschlüssen und sechs oder mehr Signalausgangsanschlüssen auszustatten

Von der Signalerzeugereinrichtung generierte und an den Signalausgängen der Signalerzeugereinrichtung anliegende Signale können somit von den damit verbundenen Signaleingangsanschlüssen der Sicherheitsdrehmomentabschalteinrichtung an deren Signalausgangsanschlüsse weitergeleitet werden. Von dort aus gelangen die Signale dann zu den Signaleingängen der Treiberschaltung. Die Treiberschaltung wiederum kann in Reaktion auf die erhaltenen Signale die Leistungsschalter der Leistungsversorgungseinrichtung geeignet steuern, um elektrische Leistung am Leistungsausgang der Leistungsversorgungseinrichtung für die Antriebsmaschine der Aufzuganlage bereitzustellen.

Um eine Signalübertragung von der Signalerzeugereinrichtung durch die Sicherheitsdrehmomentabschalteinrichtung hindurch hinzu der Treiberschaltung gesteuert und zuverlässig unterbrechen zu können, sind in der Sicherheitsdrehmomentabschalteinrichtung zwischen jedem der Signaleingangsanschlüsse und dem zugeordneten Signalausgangsanschluss jeweils ein erster und ein zweiter Signalübertragungsschalter vorgesehen. Diese beiden Signalübertragungsschalter sind in Serie miteinander verschaltet. Dementsprechend kann, wenn beide Signalübertragungsschalter in einen elektrisch durchleitenden Schaltzustand geschaltet sind, eine elektrische Verbindung zwischen dem jeweiligen Signaleingangsanschluss und dem zugehörigen Signalausgangsanschluss etabliert werden. Wenn jedoch zumindest einer dieser Signalübertragungsschalter geöffnet ist, das heißt in einen nicht elektrisch durchleitenden Schaltzustand geschaltet ist, ist eine elektrische Verbindung zwischen dem jeweiligen Signaleingangsanschluss und dem zugehörigen Signalausgangsanschluss unterbrochen.

Um eine Zuverlässigkeit bzw. eine Sicherheit, mit der die Signalübertragung durch die Sicherheitsdrehmomentabschalteinrichtung hindurch gesteuert unterbrochen werden kann, zu erhöhen, d.h. um ein Sicherheitslevel der Sicherheitsdrehmomentabschalteinrichtung zu maximieren, ist vorgesehen, dass der erste Signalübertragungsschalter von einer ersten Steuereinheit gesteuert wird und der zweite Signalübertragungsschalter von einer zweiten Steuereinheit gesteuert wird. Beide Steuereinheiten sind dabei mit dem Steuereingang der Sicherheitsdrehmomentabschalteinrichtung elektrisch verbunden und erhalten von dieser ein anliegendes Steuersignal, gemäß dem die Schaltzustände des ersten bzw. zweiten Signalübertragungsschalters dann gesteuert werden. Auf diese Weise lässt sich in der Sicherheitsdrehmomentabschalteinrichtung eine hohe Redundanz erzielen und damit die Sicherheit, mit der die Sicherheitsdrehmomentabschalteinrichtung im Bedarfsfall die elektrische Durchleitung von Signalen von der Signalerzeugereinrichtung hin zu der Treiberschaltung unterbindet, maximieren.

Elektrisch verbunden bedeutet vorangehend und im Folgenden, dass die Verbindung elektrisch, das heisst durch einen elektrisch leitenden Strompfad zwischen den zu verbinden Punkten ausgebildet ist. Eine elektromagnetische Verbindung, wie sie beispielsweise durch einen Transformator hergestellt wird ist im Sinne dieser Anmeldung keine elektrische Verbindung. Insbesondere kann die Sicherheitsdrehmomentabschalteinrichtung derart konfiguriert sein, dass ihre Signalübertragungsschalter ausschließlich dann geschlossen sind und somit ausschließlich dann eine Signalübertragung von der Signalerzeugereinrichtung hin zu der Treiberschaltung etabliert wird, wenn am Steuereingang der Sicherheitsdrehmomentabschalteinrichtung ein entsprechendes Signal anliegt. Beispielsweise kann ein solches Signal eine von null verschiedene elektrische Spannung sein und damit eine logische "1" repräsentieren. Wenn kein solches Signal am Steuereingang anliegt, soll die erste Steuereinheit alle mit ihr verbundenen ersten Signalübertragungsschalter dazu ansteuern, zu öffnen und die zweite Steuereinheit soll alle mit ihr verbundenen zweiten Signalübertragungsschalter dazu ansteuern, zu öffnen. Hierdurch wird die elektrische Verbindung zwischen den Signaleingangsanschlüssen und den Signalausgangsanschlüssen unterbrochen.

Selbst für den Fall, dass eine der Steuereinheiten kein korrektes Steuersignal liefert und/oder einer der Signalübertragungsschalter aufgrund beispielsweise eines Defektes nicht öffnet, wird die elektrische Verbindung zwischen dem zugehörigen Signaleingangsanschluss und dem Signalausgangsanschluss dennoch unterbrochen, da die jeweils andere Steuereinheit korrekt den mit ihr verbundenen Signalübertragungsschalter öffnet.

Da bei der hier vorgeschlagenen Sicherheitsdrehmomentabschalteinrichtung in allen elektrischen Durchleitungen zwischen einem der Signaleingangsanschlüsse und einem zugehörigen Signalausgangsanschluss jeweils zwei Signalübertragungsschalter in Serie miteinander verschaltet vorgesehen sind und jeder dieser Signalübertragungsschalter von einer anderen Steuereinheit gesteuert wird, ist sichergestellt, dass jede der elektrischen Durchleitungen durch Öffnen von Signalübertragungsschaltern unterbrochen wird, wenn an dem Steuereingang der Sicherheitsdrehmomentabschalteinrichtung kein Signal anliegt, welches explizit ein Schließen der Signalübertragungsschalter anweist.

Anders ausgedrückt soll die Sicherheitsdrehmomentabschalteinrichtung mit ihren Signalübertragungsschaltern und Steuereinheiten derart ausgestaltet sein, dass bei Fehlen eines Signals, welches angibt, dass derzeit keine Unterbrechung der Drehmomenterzeugung durch die Antriebsmaschine bewirkt werden soll, automatisch die Durchleitung von Signalen von der Signalerzeugereinrichtung hin zu der Treiberschaltung unterbrochen wird und auf diese Weise die Leistungsversorgung durch die Leistungsversorgungseinrichtung an die Antriebsmaschine unterbrochen wird, sodass die Antriebsmaschine mit Sicherheit kein Drehmoment erzeugen kann.

Da hierbei mit hoher Sicherheit nicht nur einige sondern alle elektrischen Verbindungen zwischen den Signalausgängen der Signalerzeugereinrichtung und den Signaleingängen der Treiberschaltung unterbrochen werden, kann auch sichergestellt werden, dass es nicht zu unerwünschten Effekten durch Übersprechen (cross talk) kommt. Insbesondere kann ein unerwünschtes Übersprechen von Signalen an ununterbrochenen Verbindungen auf unterbrochene Verbindungen, welches zu einem zu einem ungewünschten Ansteuern der Treiberschaltung führen könnte, vermieden werden. Auch ein Übersprechen von denjenigen Leistungsschaltern in der Leistungsversorgungseinrichtung, welche durch die Treiberschaltung von Signalen über ununterbrochene Verbindungen von der Signalerzeugereinrichtung aktiviert werden, auf andere Leistungsschalter in der Leistungsversorgungseinrichtung kann ausgeschlossen werden, da durch die hier vorgeschlagene Sicherheitsdrehmomentabschalteinrichtung gewährleistet wird, dass im Unterbrechungsfall mindestens fünf Verbindungen unterbrochen werden und somit maximal noch einer der Leistungsschalter durch die Treiberschaltung aktiviert wird. Dies ist ausreichend, da bei einer verbleibenden Verbindung nur noch ein IGBT angesteuert wird. Die Wechselstrommaschine wird in diesem Fall mit der resultierend Gleichspannung beaufschlagt, was unproblematisch ist.

Die zuvor beschriebene Funktionalität der Sicherheitsdrehmomentabschalteinrichtung kann auf unterschiedliche Weise strukturell implementiert werden.

Gemäß einer möglichen und vorteilhaften Ausführungsform der Erfindung kann beispielsweise jeder der Signalübertragungsschalter mit einem in einem Normalzustand leitenden Halbleiterschalter ausgebildet sein, welcher bei einem Fehlen einer Steuerspannung an einem Gate-Anschluss eine elektrische Verbindung zwischen dem dem Signalübertragungsschalter zugeordneten Signaleingangsanschluss und einem Erdungspotenzial bewirkt und bei Anliegen der Steuerspannung an dem Gate-Anschluss die elektrische Verbindung zwischen dem dem Signalübertragungsschalter zugeordneten Signaleingangsanschluss und einem Erdungspotenzial unterbricht.

Dabei kann jede der Steuereinheiten dazu konfiguriert sein, abhängig von dem an dem Steuereingang anliegenden Steuersignal die Steuerspannung an die Gate-Anschlüsse aller der jeweiligen Steuereinheit zugeordneter Signalübertragungsschalter anzulegen.

Anders ausgedrückt können die Signalübertragungsschalter der Sicherheitsdrehmomentabschalteinrichtung als Halbleiterschalter beispielsweise in Form von MOSFETs ausgebildet sein, die in ihrem Normalzustand elektrisch leitend wirken, d.h. normal-leitende Halbleiterschalter sind. Solche Halbleiterschalter verfügen typischerweise über drei Anschlüsse, welche oft als Drain, Source und Gate bezeichnet werden. Eine an den Gate-Anschluss angelegte Steuerspannung kann dabei darüber entscheiden, ob zwischen dem Drain-Anschluss und dem Source-Anschluss eine elektrisch leitende Verbindung etabliert wird oder nicht. Bei einem im Normalzustand elektrisch leitend wirkenden solchen Halbleiterschalter besteht ohne Anlegen einer Steuerspannung an den Gate-Anschluss eine elektrische Verbindung zwischen dem Drain-Anschluss und dem Source-Anschluss, wohingegen bei Anlegen einer Steuerspannung an den Gate-Anschluss eine solche elektrische Verbindung unterbrochen wird.

Für die genannte Ausführungsform können solche normal-leitenden Halbleiterschalter vorteilhaft eingesetzt werden, indem beispielsweise ihr Drain-Anschluss mit dem Signaleingangsanschluss der Sicherheitsdrehmomentabschalteinrichtung verbunden wird und ihr Source-Anschluss mit einem Erdungspotenzial verbunden wird. Solange keine Steuerspannung an dem Gate-Anschluss anliegt und der Halbleiterschalter somit elektrisch leitend ist, wird ein eventuell von der Signalerzeugereinrichtung generiertes und an dem Signaleingangsanschluss anliegendes Signal zwangsläufig über den Halbleiterschalter an das Erdungspotenzial abgeleitet und kann somit nicht den Signalausgangsanschluss und die damit verbundene Treiberschaltung erreichen. Faktisch wirkt ein derart verschalteter normal-leitender Halbleiterschalter somit wie ein im Normalzustand geöffneter, d.h. nicht elektrisch durchleitender Schalter. Erst wenn an den Gate-Anschluss des Halbleiterschalters die Steuerspannung angelegt wird, wird die elektrische Verbindung zu dem Erdungspotenzial unterbrochen, sodass das an dem Drain-Anschluss anliegende Signal der Signalerzeugereinrichtung an den Signalausgangsanschluss der Sicherheitsdrehmomentabschalteinrichtung weitergeleitet werden kann.

Um zu gewährleisten, dass auch im Falle eines Fehlverhaltens einer der Halbleiterschalter ein sicheres Unterbrechen einer Signaldurchleitung durch die Sicherheitsdrehmomentabschalteinrichtung gewährleistet ist, werden zwischen jedem der Signaleingangsanschlüsse und dem zugehörigen Signalausgangsanschluss jeweils zwei in Serie miteinander verschaltete normal-leitende Halbleiterschalter geschaltet. Selbst wenn einer dieser Halbleiterschalter beispielsweise aufgrund eines Defekts trotz fehlendem Steuersignal keine elektrische Verbindung mit dem Erdungspotenzial herstellen sollte, wird höchst wahrscheinlich zumindest an dem zweiten Halbleiterschalter eine solche elektrische Verbindung bewirkt und damit bei fehlendem Steuersignal ein Ableiten des von der Signalerzeugereinrichtung stammenden Signals an das Erdungspotenzial gewährleistet.

Durch Einsatz der vorgeschlagenen, im Normalzustand leitenden Halbleiterschalter und der beschriebenen Verschaltung derselben kann sichergestellt werden, dass bei Fehlen einer Steuerspannung eine Übertragung von durch die Signalerzeugereinrichtung generierten Signalen durch die Sicherheitsdrehmomentabschalteinrichtung hindurch zuverlässig unterbrochen wird.

Um sicherzustellen, dass allen Halbleiterschaltern das gewünschte Steuersignal zugeleitet wird, ist die erste Steuereinheit jeweils mit dem Halbleiterschalter, der als erster Signalübertragungsschalter dient, verbunden und liefert ihr Steuersignal an dessen Gate-Anschluss, wohingegen die zweite Steuereinheit unabhängig davon jeweils mit dem anderen Halbleiterschalter, der als zweiter Signalübertragungsschalter dient, verbunden ist und ihr Steuersignal an dessen Gate-Anschluss liefert. Hierdurch können zwei voneinander unabhängige Pfade zum Steuern der beiden hintereinandergeschalteten Halbleiterschalter etabliert und somit eine sicherheitssteigernde Redundanz bei der Steuerung der Halbleiterschalter bewirkt werden.

Gemäß einer konkretisierten Ausführungsform kann jede der Steuereinheiten einen Optokoppler aufweisen, welcher dazu konfiguriert ist, abhängig von dem an dem Steuereingang anliegenden Steuersignal die elektrische Steuerspannung an den Gate-Anschlüssen aller der jeweiligen Steuereinheit zugeordneter Signalübertragungsschalter zu etablieren.

Anders ausgedrückt kann sowohl die erste Steuereinheit als auch die zweite Steuereinheit jeweils einen Optokoppler aufweisen. Ein solcher Optokoppler kann zwei optisch miteinander kommunizierende Bauelemente aufweisen. Ein erstes Bauelement kann dabei von der an dem Steuereingang der Sicherheitsdrehmomentabschalteinrichtung anliegenden Spannung, d.h. von dem Steuersignal, gesteuert werden und dabei je nach empfangenem Steuersignal durch optische Kommunikation das zweite Bauelement dazu veranlassen, die elektrische Steuerspannung, mit der der Halbleiterschalter an dessen Gate-Anschluss gesteuert wird, zu generieren.

Ein Stromkreis, in dem dabei das erste Bauelement des Optokopplers integriert ist, ist hierbei von einem anderen Stromkreis, in dem das zweite Bauelement des Optokopplers aufgenommen ist, in vorteilhafter Weise galvanisch entkoppelt. Hierdurch kann beispielsweise sichergestellt werden, dass das Steuersignal, welches angeben soll, ob eine Drehmomenterzeugung durch die Antriebsmaschine momentan unterbrochen werden soll oder nicht, die von der Signalerzeugereinrichtung generierten und gegebenenfalls an die Treiberschaltung des Wechselrichters weiter zu leitenden Signale nicht in unerwünschter Weise beeinflussen kann.

Gemäß einer weiter konkretisierten Ausführungsform kann der Optokoppler eine von dem an dem Steuereingang anliegenden Steuersignal zu aktivierende Leuchtquelle und eine durch Beleuchtung durch die Leuchtquelle die Steuerspannung generierende Photodiodeneinheit aufweisen.

Mit anderen Worten kann der Optokoppler als erstes Bauelement eine Leuchtquelle beispielsweise in Form einer LED umfassen, die, wenn das Steuersignal an den Steuereingang der Sicherheitsdrehmomentabschalteinrichtung angelegt ist und somit die den Optokoppler enthaltende Steuereinheit erreicht, aktiviert wird und somit Licht emittiert. Als zweites Bauelement kann der Optokoppler dann eine Photodiodeneinheit aufweisen, die, wenn sie beleuchtet wird, eine der Steuerspannung entsprechende elektrische Spannung generiert.

Die Leuchtquelle und die Photodiodeneinheit können dabei derart relativ zueinander positioniert sein und aufeinander abgestimmt sein, dass das bei Aktivierung durch die Leuchtquelle emittierte Licht von der Photodiodeneinheit empfangen wird und diese dazu anregt, die zum Steuern der Halbleiterschalter benötigte Steuerspannung zu generieren.

Die zuvor beschriebene Photodiodeneinheit kann dabei gemäß einer konkreten Ausführungsform zwei in Serie verschaltete Photodioden aufweisen.

Jede einzelne der Photodioden kann dabei vorzugsweise lediglich einen Teil der benötigten Steuerspannung generieren. Erst durch die Serienverschaltung beider Photodioden kann die zum Steuern der Halbleiterschalter benötigte gesamte Steuerspannung erzeugt werden. Auf diese Weise kann die Sicherheit der gesamten Schaltung weiter erhöht werden, da von dem Optokoppler die Steuerspannung ausschließlich dann generiert werden kann, wenn die Leuchtquelle in Reaktion auf ein anliegendes Steuersignal aktiviert wurde und dann beide Photodioden aufgrund des von der Leuchtquelle empfangenen Lichts ihren Anteil der Steuerspannung für die Halbleiterschalter generieren.

Vorzugsweise kann die Sicherheitsdrehmomentabschalteinrichtung mit Hardware gemäß eines Sicherheitsintegritätslevels SIL3 und einer Hardwarefehlertoleranz von wenigstens 1 ausgebildet sein.

Anders ausgedrückt kann die Sicherheitsdrehmomentabschalteinrichtung mit besonders sicheren Hardwarekomponenten aufgebaut sein und diese Hardwarekomponenten in besonders sicherer Weise miteinander interagieren bzw. verschaltet sein, sodass die Sicherheitsdrehmomentabschalteinrichtung mit einer Hardwarefehlertoleranz von wenigstens 1 den Anforderungen eines Sicherheitsintegritätslevels SIL3, wie er im IEC 61508 Standard definiert ist, entspricht.

Durch eine Implementierung mit einer derart sicher ausgebildeten Hardware kann erreicht werden, dass die Sicherheitsdrehmomentabschalteinrichtung eine Drehmomenterzeugung der Antriebsmaschine einer Aufzuganlage mit sehr hoher Zuverlässigkeit unterbrechen kann und somit den sehr hohen Sicherheitsanforderungen an den Betrieb einer Aufzuganlage gerecht wird.

Die Erfüllung des Sicherheitsintegritätslevels SIL3 kann beispielsweise mit den hierin beschriebenen hardwaremäßigen Ausgestaltungen erreicht werden.

Gemäß einer vorteilhaften Ausführungsform kann ferner die Sicherheitsdrehmomentabschalteinrichtung ohne programmierbare Bauelemente ausgebildet sein.

Anders ausgedrückt werden nur sogenannte A-Bauteile, beispielsweise Transistoren, jedoch keine B-Bauteile, wie beispielsweise Mikroprozessoren verwendet. Dies führt zu besseren Sicherheitsparametern, das heisst zu einer tieferen Ausfallwahrscheinlichkeit und dadurch zu einer besseren Einstufung. Weiter wird auch die sogenannte Safe Failure Fraction (SFF) reduziert, wodurch tiefere Anforderungen an die Fehlerkennung erfüllt werden müssen. Anders ausgedrückt kann die Sicherheitsdrehmomentabschalteinrichtung vorzugsweise ausschließlich mit Bauelementen ausgestattet sein bzw. aufgebaut sein, welche nicht programmierbar sind und welche somit nicht einem anpassbaren Programm folgend ihre funktionalen oder physikalischen Eigenschaften ändern können.

Durch den Verzicht auf programmierbare Bauelemente kann erreicht werden, dass die hier vorgeschlagene Sicherheitsdrehmomentabschalteinrichtung nicht für verschiedene Versionen von Software jeweils neu hinsichtlich einzuhaltender Sicherheitsqualifikationen zertifiziert werden muss. Stattdessen kann die Sicherheitsdrehmomentabschalteinrichtung mit ihrer Hardware derart konzipiert sein, dass sie für Einsatzzwecke bei Leistungsversorgungseinrichtungen für Antriebsmaschinen in unterschiedlichen Aufzuganlagen eingesetzt werden kann, ohne dass sie für einen jeweiligen Einsatzzweck durch spezielle Software angepasst werden müsste. Die Hardware kann für diesen Zweck einmalig zertifiziert werden. Zusätzliche Einsatzzweck-spezifische Zertifizierungen können im Regelfall entfallen. Hierdurch kann insbesondere ein Wartungsaufwand reduziert werden.

Ausführungsformen der hierin beschriebenen Sicherheitsdrehmomentabschalteinrichtung können insbesondere in Wechselrichtereinrichtungen gemäß dem zweiten Aspekt der Erfindung vorteilhaft eingesetzt werden, um dort eine Signalübertragung zwischen einer Signalerzeugereinrichtung und einer Leistungsversorgungseinrichtung gesteuert unterbrechen zu können.

Die Signalerzeugereinrichtung kann hierbei als DSP ausgebildet sein, der bedarfsgerecht angepasste PWM-Signale (pulsweiten-modulierte Signale) generieren und zum Steuern der Leistungsversorgungseinrichtung an deren Treiberschaltung übermitteln kann.

Gemäß einer konkretisierten Ausführungsform kann dabei die Leistungsversorgungseinrichtung eine IGBT-Treiberschaltung sowie drei obere und drei untere IGBTs aufweisen. Die IGBTs können dabei von der IGBT-Treiberschaltung in Abhängigkeit von durch die Signalerzeugereinrichtung erzeugten Steuersignalen, welche durch die Sicherheitsdrehmomentabschalteinrichtung hindurchgeleitet wurden, dazu angesteuert werden, an dem Leistungseingang anliegende elektrische Leistung gesteuert zumindest teilweise an den Leistungsausgang weiterzuleiten.

Anders ausgedrückt kann ein als Leistungsversorgungseinrichtung dienender Teil beispielsweise eines Wechselrichters über zwei Sätze von IGBTs verfügen, wobei sowohl ein oberer Satz also ein unterer Satz jeweils drei IGBTs umfasst. Jeder der IGBTs wird dabei von der Treiberschaltung gesteuert, wobei die Treiberschaltung die IGBTs abhängig von den Steuersignalen, die sie von der Signalerzeugereinrichtung empfängt, steuert.

Ausführungsformen der hierin beschriebenen Sicherheitsdrehmomentabschalteinrichtung bzw. der damit ausgestatteten Wechselrichtereinrichtung können in einer Aufzuganlage gemäß einer Ausführungsform des dritten Aspekts der Erfindung eingesetzt werden, um im Bedarfsfall sicherstellen zu können, dass die Antriebsmaschine der Aufzuganlage temporär keinerlei Drehmoment erzeugen kann und somit die von der Antriebsmaschine angetriebene Aufzugkabine nicht unbeabsichtigt verlagert werden kann. Hierdurch kann eine Sicherheit beim Betrieb der Aufzuganlage gesteigert werden.

Beispielsweise kann in der Aufzuganlage ein Betriebszustand mithilfe einer sogenannten Sicherheitskette überwacht werden. Teile dieser Sicherheitskette können mehrere Türschalter sein, wobei die Sicherheitskette ausschließlich dann geschlossen ist, wenn alle Türschalter geschlossen sind. Ein bei geschlossener Sicherheitskette durch die Sicherheitskette zu übermittelndes Signal kann als Steuersignal an den Steuereingang der Sicherheitsdrehmomentabschalteinrichtung dienen. Dementsprechend liegt an dem Steuereingang ausschließlich dann das Steuersignal an, wenn die Sicherheitskette geschlossen ist, d.h. wenn alle Türschalter und die damit verbundenen Aufzugtüren geschlossen sind. Nur in diesem Fall kann die Antriebsmaschine der Aufzuganlage mit Leistung versorgt werden. Sobald die Sicherheitskette unterbrochen wird, entfällt das Steuersignal an dem Steuereingang der Sicherheitsdrehmomentabschalteinrichtung, woraufhin diese zuverlässig die Drehmomenterzeugung durch die Antriebsmaschine der Aufzuganlage unterbindet. Damit ist sichergestellt, dass die Aufzugkabine von der Antriebsmaschine nicht bewegt werden kann, solange zumindest eine der Aufzugtüren nicht vollständig geschlossen ist.

Es wird darauf hingewiesen, dass einige der möglichen Merkmale und Vorteile der Erfindung hierin mit Bezug auf unterschiedliche Ausführungsformen einerseits der Sicherheitsdrehmomentabschalteinrichtung und andererseits der damit ausgestatteten Wechselrichtereinrichtung bzw. der gesamten Aufzuganlage beschrieben sind. Ein Fachmann erkennt, dass die Merkmale in geeigneter Weise kombiniert, übertragen, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Aufzuganlage gemäß einer Ausführungsform der vorliegenden Erfindung.
Fig. 2 zeigt eine Wechselrichtereinrichtung gemäß eines früheren Konzepts.
Fig. 3 zeigt eine Wechselrichtereinrichtung gemäß einer Ausführungsform der vorliegenden Erfindung.
Fig. 4 zeigt eine Schaltung für eine Sicherheitsdrehmomentabschalteinrichtung gemäß einer Ausführungsform der vorliegenden Erfindung.

Die Figuren sind lediglich schematisch und nicht maßstabsgetreu. Gleiche Bezugszeichen bezeichnen in den verschiedenen Figuren gleiche oder gleichwirkende Merkmale

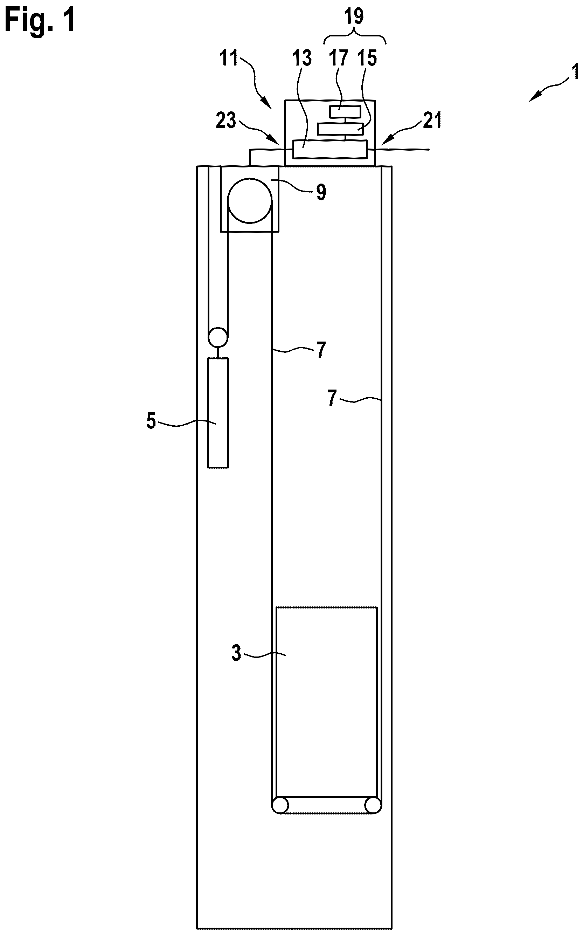

Fig. 1 zeigt eine Aufzuganlage 1 mit einer Aufzugkabine 3 und einem Gegengewicht 5, die mithilfe eines Tragmittels 7 von einer Antriebsmaschine 9 innerhalb eines Aufzugschachts vertikal verlagert werden können. Die Antriebsmaschine 9 wird dabei von einer Wechselrichtereinrichtung 11 mit elektrischer Leistung versorgt. Die Wechselrichtereinrichtung 11 umfasst eine Leistungsversorgungseinrichtung 13, welche an einem Leistungseingang 21 mit elektrischer Leistung von einer Hauptleistungsquelle 71 gespeist wird und welche von einer Signalerzeugereinrichtung 17 über Signale gesteuert wird.

Im Bedarfsfall, zum Beispiel wenn die Aufzugkabine 3 an einem Stockwerk hält und Aufzugtüren geöffnet sind, um ein Ein- oder Aussteigen von Passagieren zu ermöglichen, kann es erforderlich sein, sicherzustellen, dass die Aufzugkabine 3 temporär keinesfalls bewegt wird.

Für Aufzuganlagen war es lange üblich, statische Wechselrichter mit Schaltern, Relais oder Schützen auszustatten, um die Leistungsversorgung sicher und zuverlässig von der Antriebsmaschine 9 trennen zu können.

Solche Schalter, Relais oder Schütze sollen nun durch Verwendung elektronischer Schaltkreise ersetzt werden. Solche elektronischen Schaltkreise können vorteilhaft hinsichtlich niedrigerer Kosten, geringerer Geräuschentwicklung und/oder höherer Zuverlässigkeit als herkömmliche Schalter, Relais oder Schütze sein.

Zwischen die Signalerzeugereinrichtung 17 und die Leistungsversorgungseinrichtung 13 wird hierzu eine Sicherheitsdrehmomentabschalteinrichtung 15 geschaltet, mithilfe derer eine Drehmomenterzeugung der von der Leistungsversorgungseinrichtung 13 versorgten Antriebsmaschine 9 zuverlässig unterbrochen werden kann. Die Signalerzeugereinrichtung 17 und die Sicherheitsdrehmomentabschalteinrichtung 15 sind gemeinsam Teil einer Wechselrichtersteuerung 19.

In offiziellen Regularien wie beispielsweise den europäischen Normen EN61800-5-2:2007 und EN81-20:2014 bzw. deren Vorgängerversion EN81.1:1998 sind Vorgaben und Erfordernisse angegeben, die beim Bau bzw. Betrieb von Aufzuganlagen zu berücksichtigen sind.

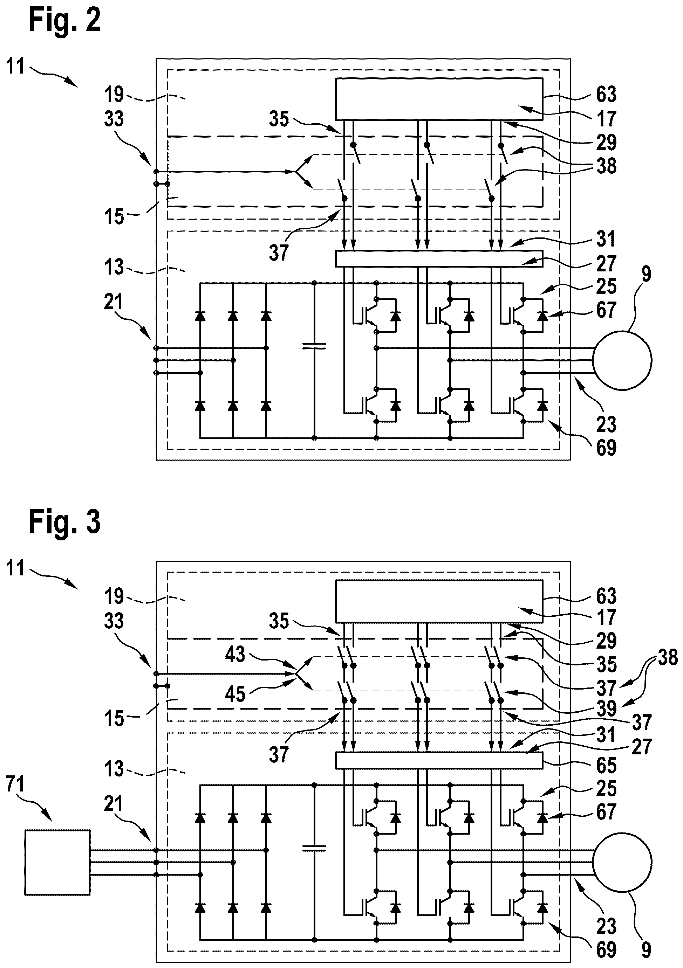

Zusätzlich zu diesen Vorgaben und Erfordernissen können folgende weitere Vorgaben definiert werden, die einen wesentlichen Einfluss auf die Auslegung einer Schaltung für eine Sicherheitsdrehmomentabschalteinrichtung haben können:
i) Um zu vermeiden, dass eine Software Teil einer Zertifizierung von Aufzugkomponenten wird, kann es zu bevorzugen sein, die Sicherheitsdrehmomentabschalteinrichtung ohne eine Verwendung jeglicher programmierbarer Logik-Bauelemente zu realisieren. Diese Maßnahme kann einen Aufwand für Wartung oder Ähnliches reduzieren.
ii) Die Sicherheitsdrehmomentabschalteinrichtung sollte für bzw. in Wechselrichtereinrichtungen verschiedener Hersteller und somit mit verschiedenen Baukonzepten einsetzbar sein. Diese Anforderung kann einen erheblichen Einfluss auf die Sicherheitsfunktion haben. Frühere Konzepte von Sicherheitsdrehmomentabschalteinrichtungen konnten in der in Fig. 2 dargestellten Weise ausgelegt sein. Sie bestanden aus einer 2-Kanal-Struktur, von denen jede entweder die PWM-Signale zu den drei oberen IGBTs oder den drei unteren IGBTs einer Leistungsversorgungseinrichtung unterbrechen konnte. Ein Versagen bei einem der Kanäle führte dazu, dass entweder die oberen oder die unteren IGBTs nicht unterbrochen wurden. Es wurde angenommen, dass es ausreichen würde, alle oberen IGBTs oder alle unteren IGBTs abzuschalten, um den Wechselrichter daran zu hindern, ein rotierendes Feld in dem Wechselstrom-Motor der angeschlossenen Antriebsmaschine zu induzieren, wodurch ein Drehmoment aufgebaut würde und der Motor zu Rotationen veranlasst würde. Daher musste ein Übersprechen (cross talk) zwischen den PWM-Signalen für die obere Seite und für die untere Seite in der IGBT-Gate-Treiberschaltung ausgeschlossen werden können. Ein solches Fehlverhalten kann jedoch für bestimmte Leistungsmodule nicht zuverlässig ausgeschlossen werden. Daher wurde, wie weiter unten beschrieben, die Schaltung für die Sicherheitsdrehmomentabschalteinrichtung wie in Fig. 3 dargestellt ergänzt. Auf diese Weise wird selbst bei einem Fehler in einem der Kanäle die Leistung von der Antriebsmaschine zuverlässig getrennt, sogar für den Fall eines Fehlers in der Leistungseinheit.
iii) Die Schaltung der Sicherheitsdrehmomentabschalteinrichtung sollte vorzugsweise in der Wechselrichtersteuerung bzw. auf deren Platine realisiert werden, welche unverändert in verschiedenen Varianten von Wechselrichtern eingesetzt werden kann. Ein solches Vorgehen kann den Aufwand zum Zertifizieren jeder Variante von Wechselrichtern reduzieren.
iv) Die Schaltung der Sicherheitsdrehmomentabschalteinrichtung sollte gemäß EN81-20:2014 und EN81-1:1998 zertifiziert sein, um in der Lage zu sein, den Wechselrichter in Bereichen zu verwenden, in denen der neue Standard nicht akzeptiert wird.

Als Konsequenz kann es bevorzugt sein, die Schaltung der Sicherheitsdrehmomentabschalteinrichtung in Übereinstimmung mit EN61800-5-2:2007 mit einem Sicherheitsintegritätslevel SIL3 und einer Hardwarefehlertoleranz von wenigstens 1 sowie in Übereinstimmung mit EN81-1:1998 §14.1 zu realisieren, wodurch die notwendige Hardwarefehlertoleranz erhöht wird, um die Anforderungen des Fehlerbaums. das heisst beispielweise eine Fehlertoleranz von drei Komponenten (Transistoren) in EN81 zu erfüllen.

Unter Berücksichtigung der genannten Vorgaben und Erfordernisse wird somit eine Sicherheitsdrehmomentabschalteinrichtung 15 für eine Wechselrichtereinrichtung 11 vorgeschlagen, wie sie beispielhaft in Fig. 3 dargestellt ist. Die Wechselrichtereinrichtung 11 unterscheidet sich dabei von dem in Fig. 2 dargestellten früheren Konzept hauptsächlich hinsichtlich des Aufbaus der Sicherheitsdrehmomentabschalteinrichtung 15.

Die Wechselrichtereinrichtung 11 wird dabei an einem Leistungseingang 21 von einer Hauptleistungsquelle 71 mit elektrischer Leistung in Form eines Drehstroms versorgt. In der Leistungsversorgungseinrichtung 13 der Wechselrichtereinrichtung 11 wird die zugeführte elektrische Leistung an Leistungsschalter 25 in Form von drei oberen IGBTs 67 und drei unteren IGBTs 69 geleitet. Je nach Schaltzustand der IGBTs 67, 69 wird die elektrische Leistung dann an einen Leistungsausgang 23 der Leistungsversorgungseinrichtung 13 weitergegeben. An diesen Leistungsausgang 23 ist die Antriebsmaschine 9 der Aufzuganlage 1 angeschlossen.

Die IGBTs 67, 69 werden von einer gemeinsamen Treiberschaltung 27 in Form einer IGBT-Treiberschaltung 65 gesteuert. Die IGBT-Treiberschaltung 65 steuert dabei jeden der drei oberen und drei unteren IGBTs 67, 69 in Reaktion auf PWM-Signale, welche von der Signalerzeugereinrichtung 17 in der Wechselrichtersteuerung 19 erzeugt wurden.

Um die Weiterleitung der PWM-Signale von der Signalerzeugereinrichtung 17 an die Treiberschaltung 27 im Bedarfsfall unterbrechen zu können, ist zwischen die Signalerzeugereinrichtung 17 und die Treiberschaltung 27 die Sicherheitsdrehmomentabschalteinrichtung 15 geschaltet. Jeder von sechs Signalausgängen 29 der Signalerzeugereinrichtung 17 ist dabei mit einem Signaleingangsanschluss 35 der Sicherheitsdrehmomentabschalteinrichtung 15 verbunden. Ferner ist jeder von sechs Signaleingängen 31 der Treiberschaltung 27 mit einem Signalausgangsanschluss 37 der Sicherheitsdrehmomentabschalteinrichtung 15 verbunden.

Im Gegensatz zu dem in Fig. 2 dargestellten früheren Konzept, bei dem zwischen jedem der Signaleingangsanschlüsse 35 und dem zugeordneten Signalausgangsanschluss 37 in der Sicherheitsdrehmomentabschalteinrichtung 15 lediglich ein einzelner Signalübertragungsschalter 38 vorgesehen war, ist bei dem hier vorgestellten Konzept vorgesehen, zwischen jedem der Signaleingangsanschlüsse 35 und dem zugehörigen Signalausgangsanschluss 37 zwei in Serie verschaltete Signalübertragungsschalter 39, 41 vorzusehen. Indem sowohl der erste Signalübertragungsschalter 39 als auch der zweite Signalübertragungsschalter 41 in einen durchleitenden Zustand geschaltet werden, kann eine elektrisch durchleitender Verbindung zwischen dem jeweiligen Signaleingangsanschluss 35 und dem zugehörigen Signalausgangsanschluss 37 etabliert werden.

Um Schaltzustände der ersten und zweiten Signalübertragungsschalter 39, 41 unabhängig voneinander schalten zu können, sind in der Sicherheitsdrehmomentabschalteinrichtung 15 eine erste Steuereinheit 43 und eine von dieser unabhängige zweite Steuereinheit 45 vorgesehen (in Fig. 3 nur sehr schematisch dargestellt). Beide Steuereinheiten 43, 45 sind mit einem Steuereingang 33 der Sicherheitsdrehmomentabschalteinrichtung 15 elektrisch verbunden und können über diesen Steuereingang 33 beispielsweise ein zum Steuern einer temporären Unterbrechung der Drehmomenterzeugung der Antriebsmaschine einzusetzendes Steuersignal empfangen. Beispielsweise kann ein solches Steuersignal von einer Sicherheitskette der Aufzuganlage 1 geliefert werden. Die erste Steuereinheit 43 schaltet dabei die Schaltzustände aller ersten Signalübertragungsschalter 39, wohingegen die zweite Steuereinheit 45 die Schaltzustände aller zweiten Signalübertragungsschalter 41 steuert.

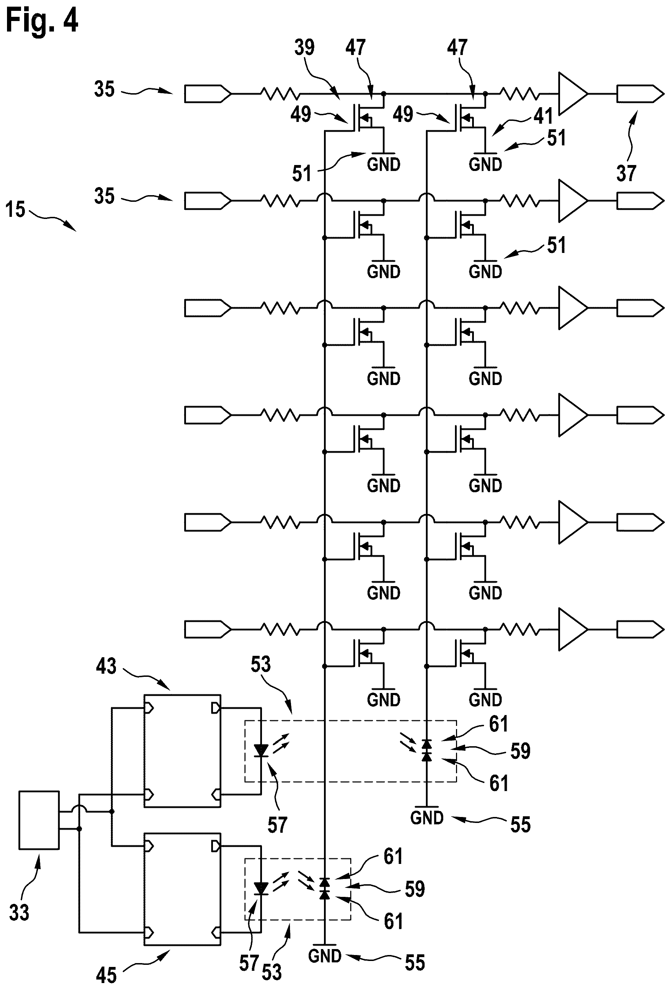

In Fig. 4 ist eine mögliche Ausgestaltung einer Schaltung für eine Sicherheitsdrehmomentabschalteinrichtung 15 dargestellt.

Der Steuereingang 33 ist sowohl mit der ersten Steuereinheit 43 als auch mit der zweiten Steuereinheit 45 elektrisch verbunden. Jede der beiden Steuereinheiten 43, 45 verfügt über einen eigenen Optokoppler 53. In dem jeweiligen Optokoppler 53 ist eine Leuchtquelle 57 beispielsweise in Form einer LED vorgesehen. Je nach anliegendem Steuersignal an dem Steuereingang 33 wird die Leuchtquelle 57 dazu angeregt, Licht zu emittieren oder nicht. Der Optokoppler 53 verfügt ferner über eine Photodiodeneinheit 59. Die Photodiodeneinheit 59 ist galvanisch von dem Rest des Optokopplers 53 und insbesondere von dem Steuereingang 33 entkoppelt. Jede Photodiodeneinheit 59 umfasst zwei Photodioden 61, welche in Serie miteinander verschaltet sind. Wenn Licht auf die Photodioden 61 trifft, generieren diese ähnlich wie eine Solarzelle eine elektrische Spannung.

Jede Photodiodeneinheit 59 ist an einer Seite mit einem Erdungspotenzial 55 und an einer entgegengesetzten Seite mit Gate-Anschlüssen 49 mehrerer Halbleiterschalter 47 verbunden. Die Photodiodeneinheit 59 des Optokopplers 53 der ersten Steuereinheit 43 ist im dargestellten Beispiel mit den Gate-Anschlüssen 49 von Halbleiterschaltern 47, die als zweite Signalübertragungsschalter 41 dienen, verbunden, wohingegen die Photodiodeneinheit 59 des Optokopplers 53 der zweiten Steuereinheit 45 mit den Gate-Anschlüssen 49 von Halbleiterschaltern 47, die als erste Signalübertragungsschalter 39 dienen, verbunden ist.

Die Halbleiterschalter 47 sind dabei als im Normalzustand elektrisch leitende Schalter ausgebildet und derart angeschlossen, dass sie bei einem Fehlen einer Steuerspannung an dem jeweiligen Gate-Anschluss 49 eine elektrische Verbindung zwischen einem der Signaleingangsanschlüsse 35, mit dem ein Drain-Anschluss oder ein Source-Anschluss des Halbleiterschalters 47 verbunden ist, und einem Erdungspotenzial 51 bewirken. In diesem Fall wird ein eventuell an dem jeweiligen Signaleingangsanschluss 35 anliegendes elektrisches Spannungssignal über den Halbleiterschalter 47 an das Erdungspotenzial 51 abgeleitet und kann somit nicht an den mit dem Signaleingangsanschluss 35 elektrisch verbundenen Signalausgangsanschluss 37 weitergeleitet werden. Eine Durchleitung von an den Signaleingangsanschlüssen 35 anliegenden Signalen der Signalerzeugereinrichtung 17 ist bei fehlender Steuerspannung an den Gate-Anschlüssen 49 somit zuverlässig unterbrochen.

Nur wenn an dem Steuereingang 33 der Sicherheitsdrehmomentabschalteinrichtung 15 ein Steuersignal anliegt, welches die Photodioden 57 der beiden Optokoppler 53 dazu veranlasst Licht auf die jeweilige Photodiodeneinheit 59 zu schicken und die Photodioden 61 daraufhin gemeinsam eine ausreichend hohe Steuerspannung an den Gate-Anschlüssen 49 aller mit ihnen verbundener Halbleiterschalter 47 generieren, können die Halbleiterschalter 47 in einen nicht-leitenden Zustand schalten. Damit wird die elektrische Verbindung zwischen den Signaleingangsanschlüssen 35 und dem Erdungspotenzial 51 unterbrochen, sodass die Signale der Signalerzeugereinrichtung 17 an die jeweiligen Signalausgangsanschlüsse 37 weitergeleitet werden. In Reaktion auf den Empfang dieser Signale kann dann die damit verbundene Treiberschaltung 27 die Leistungsversorgungseinrichtung 13 dazu ansteuern, eine gewünschte elektrische Leistung an die Antriebsmaschine 9 durchzuleiten.

Zusammengefasst und mit anderen Worten ausgedrückt kann die Schaltung für die Sicherheitsdrehmomentabschalteinrichtung 15 mit der in Fig. 4 dargestellten Topologie realisiert werden. Der Eingang der Sicherheitskette wird verwendet, um die LEDs zweier Optokoppler 53 anzusteuern. Die photovoltaischen Ausgänge der Optokoppler, die mit mehreren in Serie verschalteten Photodioden ausgestaltet sind, werden verwendet, um die Gates von normal- leitenden Halbleiterbauelementen anzusteuern. Solange keine Spannung an deren Gates angelegt ist, beispielsweise aufgrund abgeschalteter LEDs in dem Optokoppler oder einer Fehlfunktion in einem Optokoppler, werden die sechs PWM-Signale, die durch den DSP erzeugt wurden, mit dem Erdungspotenzial GND kurzgeschlossen und daher daran gehindert, an die Leistungseinheit durchgeleitet zu werden. Sobald die LEDs der Optokoppler aktiviert sind, wird eine negative Spannung an die Gate-Anschlüsse der Halbleiterschalter angelegt, was diese dazu bringt, hoch-impedant zu werden. Hierdurch werden die sechs PWM-Signale unverändert durch die Schaltung der Sicherheitsdrehmomentabschalteinrichtung hindurchgeleitet.

Die verwendete Topologie für die Sicherheitsschaltung der Sicherheitsdrehmomentabschalteinrichtung kann folgende signifikante Vorteile ermöglichen:
- das elektrische bzw. elektronische System der Sicherheitsdrehmomentabschalteinrichtung kann in der Wechselrichtersteuerung bzw. auf der Wechselrichtersteuerung-Platine platziert werden. Daher kann sie für verschiedene Varianten statischer Wechselrichter eingesetzt werden, ohne dass eine weitere Zertifizierung der Sicherheitsfunktion benötigt würde.
- Da es keine Anforderungen an die Leistungsversorgungseinrichtung bzw. die Leistungsplatine gibt, ist diese nicht Teil der Zertifizierung.
- Das Weiterleiten der an den Signaleingangsanschlüssen der Sicherheitsdrehmomentabschalteinrichtung anliegenden Signale an das Erdungspotenzial eignet sich besser für verschiedene Topologien von Leistungsversorgungseinrichtungen. Das reduziert die Notwendigkeit, zusätzliche Treiberschaltungen nachträglich hinzuzufügen.
- Da die Sicherheitsschaltung mit einem fehler-sicheren Prinzip aufgebaut ist, gibt es keine Fehlerzustände, die detektiert werden können. Daher ist es nicht länger ein Erfordernis, die Sicherheitsschaltung nach jeder Fahrt zu öffnen, was den Aufbau der Aufzugsteuerung vereinfachen kann.
- Die Sicherheitsschaltung wird lediglich durch die Sicherheitsschaltung selbst mit Leistung versorgt und benötigt keine zusätzliche Versorgung.
- Die Sicherheitskette braucht nicht länger große Spulen von Schaltern, Relais oder Schützen versorgen, sodass ihre eigene Leistungsversorgung einschließlich eines Kupferdrahtdurchmessers in den durchleitenden Kabeln reduziert werden kann.

Zusammenfassend kann die vorgeschlagene Sicherheitsdrehmomentabschalteinrichtung aus einem kosteneffizienten und robusten elektrischen bzw. elektronischen System bestehen, dass alle Anforderungen erfüllt. Ein höherer Aufwand im Vergleich zu bisher verwendeten Lösungen kann wesentliche Vorteile bei der Wartungsfähigkeit ermöglichen. Außerdem gibt es keine Anforderungen an die angeschlossene Leistungsversorgungseinrichtung und die Sicherheitsschaltung.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Sicherheitsdrehmomentabschalteinrichtung (15) zum Unterbrechen einer Drehmomenterzeugung durch eine von einer Leistungsversorgungseinrichtung (13) versorgte Antriebsmaschine (9) einer Aufzuganlage (1),
wobei die Leistungsversorgungseinrichtung (13) einen Leistungseingang (21), einen Leistungsausgang (23), mehrere mit dem Leistungseingang (21) und dem Leistungsausgang (23) verbundene Leistungsschalter (25) und eine die Leistungsschalter (25) steuernde Treiberschaltung (27) aufweist, und wobei die Leistungsversorgungseinrichtung (13) dazu konfiguriert ist, dass eine an dem Leistungseingang (21) anliegende elektrische Leistung gesteuert durch die Leistungsschalter (25) zumindest teilweise an den Leistungsausgang (23) weitergeleitet wird und die Leistungsschalter (25) von der Treiberschaltung (27) in Abhängigkeit von Signalen, die von einer Signalerzeugereinrichtung (17) über eine erste Vielzahl von Signalausgängen (29) an Signaleingänge (31) der Treiberschaltung (27) angelegt werden, gesteuert werden;
wobei die Sicherheitsdrehmomentabschalteinrichtung (15) einen Steuereingang (33) und eine zweite Vielzahl jeweils von Signaleingangsanschlüssen (35) und von Signalausgangsanschlüssen (37) und von ersten und zweiten Signalübertragungsschaltern (39, 41) aufweist, wobei jeder der Signalausgänge (29) der Signalerzeugereinrichtung (17) an einen der Signaleingangsanschlüsse (35) und jeder der Signaleingänge (31) der Treiberschaltung (27) an einen der Signalausgangsanschlüsse (37) anschließbar ist;
wobei jeder der Signalübertragungsschalter (39, 41) mit einem in einem Normalzustand leitenden Halbleiterschalter (47) ausgebildet ist, welcher bei einem Fehlen einer Steuerspannung an einem Gate-Anschluss (49) eine elektrische Verbindung zwischen dem dem Signalübertragungsschalter (39, 41) zugeordneten Signaleingangsanschluss (35) und einem Erdungspotenzial (51) bewirkt und bei Anliegen der Steuerspannung an dem Gate-Anschluss (49) die elektrische Verbindung zwischen dem dem Signalübertragungsschalter (39, 41) zugeordneten Signaleingangsanschluss (35) und einem Erdungspotenzial (51) unterbricht;
wobei der Steuereingang (33) mit einer ersten und einer zweiten Steuereinheit (43, 45) elektrisch verbunden ist und die erste Steuereinheit (43) gesteuert durch ein an dem Steuereingang (33) anliegendes Steuersignal Schaltzustände aller ersten Signalübertragungsschalter (39) schaltet und die zweite Steuereinheit (45) gesteuert durch das an dem Steuereingang (33) anliegende Steuersignal Schaltzustände aller zweiten Signalübertragungsschalter (41) schaltet;
wobei jede der Steuereinheiten (43, 45) dazu konfiguriert ist, abhängig von dem an dem Steuereingang (33) anliegenden Steuersignal die Steuerspannung an die Gate-Anschlüsse (49) aller der jeweiligen Steuereinheit (43, 45) zugeordneter Signalübertragungsschalter (39, 41) anzulegen.

2. Sicherheitsdrehmomentabschalteinrichtung nach Anspruch 1, wobei die Sicherheitsdrehmomentabschalteinrichtung (15) sechs Signaleingangsanschlüsse (35) und sechs Signalausgangsanschlüsse (37) aufweist.

3. Sicherheitsdrehmomentabschalteinrichtung nach einem der vorhergehenden Ansprüche, wobei jede der Steuereinheiten (43, 45) einen Optokoppler (53) aufweist, welcher dazu konfiguriert ist, abhängig von dem an dem Steuereingang (33) anliegenden Steuersignal die elektrische Steuerspannung an den Gate-Anschlüssen (49) aller der jeweiligen Steuereinheit (43, 45) zugeordneter Signalübertragungsschalter (39, 41) zu etablieren.

4. Sicherheitsdrehmomentabschalteinrichtung nach Anspruch 3, wobei der Optokoppler (53) eine von dem an dem Steuereingang (33) anliegenden Steuersignal zu aktivierende Leuchtquelle (57) und eine durch Beleuchtung durch die Leuchtquelle (57) die Steuerspannung generierende Photodiodeneinheit (59) aufweist.

5. Sicherheitsdrehmomentabschalteinrichtung nach Anspruch 4, wobei die Photodiodeneinheit (59) zwei in Serie verschaltete Photodioden (61) aufweist.

6. Sicherheitsdrehmomentabschalteinrichtung nach einem der vorangehenden Ansprüche, wobei die Sicherheitsdrehmomentabschalteinrichtung (15) mit Hardware gemäß eines Sicherheitsintegritätslevels SIL3 und einer Hardwarefehlertoleranz von wenigstens 1 ausgebildet ist.

7. Sicherheitsdrehmomentabschalteinrichtung nach einem der vorangehenden Ansprüche, wobei die Sicherheitsdrehmomentabschalteinrichtung (15) ohne programmierbare Bauelemente ausgebildet ist.

8. Wechselrichtereinrichtung (19) zum Bereitstellen einer elektrischen Antriebsleistung für eine Antriebsmaschine (9) einer Aufzuganlage (1), wobei die Wechselrichtereinrichtung (19) aufweist:
- eine Signalerzeugereinrichtung (17) zum Erzeugen von Steuersignalen, wobei die Signalerzeugereinrichtung (17) eine erste Vielzahl von Signalausgängen (29) aufweist;
- eine Leistungsversorgungseinrichtung (13) mit einem Leistungseingang (21), einem Leistungsausgang (23), mehreren mit dem Leistungseingang (21) und dem Leistungsausgang (23) verbundenen Leistungsschaltern (25) und einer die Leistungsschalter (25) steuernden Treiberschaltung (27), wobei die Leistungsversorgungseinrichtung (13) dazu konfiguriert ist, dass eine an dem Leistungseingang (21) anliegende elektrische Leistung gesteuert durch die Leistungsschalter (25) zumindest teilweise an den Leistungsausgang (23) weitergeleitet wird und die Leistungsschalter (25) von der Treiberschaltung (27) in Abhängigkeit von Signalen, die von einer Signalerzeugereinrichtung (17) über eine erste Vielzahl von Signalausgängen (29) an Signaleingänge (31) der Treiberschaltung (27) angelegt werden, gesteuert werden; und
- eine Sicherheitsdrehmomentabschalteinrichtung (15) gemäß einem der vorangehenden Ansprüche, wobei jeder der Signalausgänge (29) der Signalerzeugereinrichtung (17) an einen der Signaleingangsanschlüsse (35) und jeder der Signaleingänge (31) der Treiberschaltung (27) an einen der Signalausgangsanschlüsse (37) angeschlossen ist.

9. Wechselrichtereinrichtung nach Anspruch 8, wobei die Signalerzeugereinrichtung (17) mit einem Digital-Signal-Prozessor (63) ausgebildet ist.

10. Wechselrichtereinrichtung nach einem der Ansprüche 8 und 9, wobei die Leistungsversorgungseinrichtung (13) eine IGBT-Treiberschaltung (65) sowie drei obere IGBTs (67) und drei untere IGBTs (69) aufweist, wobei die oberen und unteren IGBTs (67, 69) von der IGBT-Treiberschaltung (65) in Abhängigkeit von durch die Signalerzeugereinrichtung (17) erzeugten Steuersignalen, welche durch die Sicherheitsdrehmomentabschalteinrichtung (15) hindurchgeleitet wurden, dazu angesteuert werden, an dem Leistungseingang (21) anliegende elektrische Leistung gesteuert zumindest teilweise an den Leistungsausgang (23) weiterzuleiten.

11. Aufzuganlage (1) aufweisend:
- eine Wechselrichtereinrichtung (11) gemäß einem der Ansprüche 8 bis 10;
- eine Hauptleistungsquelle (71) zum Bereitstellen einer elektrischen Leistung an dem Leistungseingang (21) der Leistungsversorgungseinrichtung (13) der Wechselrichtereinrichtung (11); und
- eine elektrische Antriebsmaschine (9), welche an den Leistungsausgang (23) der Leistungsversorgungseinrichtung (13) angeschlossen ist.
